# EUROPEAN PATENT SPECIFICATION

(11) **EP 3 222 129 B1**
(45) Date of publication and mention of the grant of the patent: **24.04.2019**
(21) Application number: 17159561.4
(22) Date of filing: 07.03.2017
(51) Int. Cl.: A01B 59/042, B60D 1/46

(54) **TOWING DEVICE FOR AN AGRICULTURAL OR INDUSTRIAL VEHICLE**
ZUGEINRICHTUNG FÜR EIN LANDWIRTSCHAFTLICHES ODER INDUSTRIELLES FAHRZEUG
DISPOSITIF DE REMORQUAGE POUR VEHICULE AGRICOLE OU INDUSTRIELE

(30) Priority: 24.03.2016 IT UA20162001
(43) Date of publication of application: 27.09.2017
(73) Proprietor: CBM - S.P.A., 41122 Modena (IT)
(72) Inventor: CORNIA, Enrico Maria, 41122 Modena (IT)
(74) Representative: Zoli, Filippo

(56) References cited:
- EP-A1- 1 609 344
- EP-A1- 1 867 499
- EP-A1- 1 974 963
- EP-A2- 0 308 271
- WO-A1-90/06240
- US-A- 5 332 248

## Description

The present invention relates to a towing device for an agricultural or industrial vehicle.

The towing devices for agricultural or industrial vehicles, conventionally called pick up hitches, are generally composed of an upper frame, associable with the towing vehicle, and of a lower frame connected to it, which has an extractable portion that supports a hooking element of the vehicle to be towed.

In particular, the lower frame is hinged to the upper frame and is movable between an open configuration and a closed configuration, and the extractable portion slides with respect to the lower frame between a retracted position and an extended position.

More in detail, the lower frame is brought to the open configuration and the extractable portion to the extended position in order to allow the engagement of the hooking element with the vehicle to be towed; the lower frame is then brought to the closed configuration and the extractable portion to the retracted position for towing the vehicle itself.

In order to guarantee the correct performance of the towing phase as well as the operators' safety, the towing device is provided with locking means adapted to prevent the sliding, during this phase, of the extractable portion with respect to the lower frame.

A towing device is known from EP 1 609 344, in which the locking means are composed of a locking element integrally associated with the extractable portion and that, in its retracted position and with the lower frame in the closed configuration, engages with an abutment member integral with the upper frame. As a result of the mutual interaction between the locking element and the abutment element, the extractable portion remains in its retracted position and transfers the tensile stress of the hooking element to the upper frame.

This known type of towing device has some drawbacks.

In particular, this device does not allow the operator for a direct view of the position of the locking element, that is, it does not allow checking visually that the same is engaged with the abutment element and therefore able to correctly transmit the mechanical stresses between the upper frame and the hooking element.

The placement of the locking element of the towing device described by EP 1 609 344 does not allow therefore operating in optimum safety conditions.

WO 90/06240 discloses a towing device comprising an upper frame, a lower frame hinged to the upper frame and movable between a closed configuration and an open configuration, an extractable portion associated with the lower frame in a sliding manner and supporting at least one hooking element, locking means of the extractable portion with respect to the lower frame comprising at least one locking element associated with the upper frame and adapted to be inserted inside a corresponding hole defined on the extractable portion.

The main aim of the present invention is to provide a towing device for agricultural or industrial vehicles which allows the operator checking visually, in a direct and secure way, the position and, therefore, the correct operation of the relative locking means.

Within this aim, one object of the present invention is to provide a towing device that allows operating under conditions of greater safety than the devices of known type.

Another object of the present invention is to provide a towing device for agricultural or industrial vehicles which allows to overcome the mentioned drawbacks of the prior art within the ambit of a simple, rational, easy, effective to use and low cost solution.

The above mentioned objects are achieved by the present towing device for agricultural or industrial vehicles according to claim 1.

Other characteristics and advantages of the present invention will become more evident from the description of a preferred, but not exclusive, embodiment of a towing device for agricultural or industrial vehicles, illustrated by way of an indicative, but non-limiting, example in the accompanying drawings, wherein:

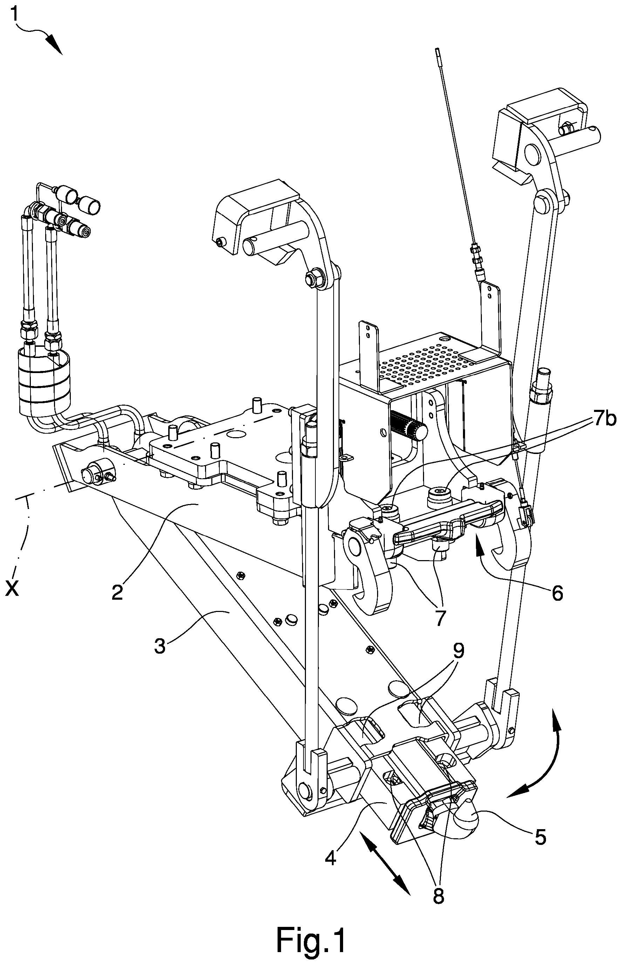

Figure 1 is an axonometric view of a device according to the invention, in a coupling configuration;

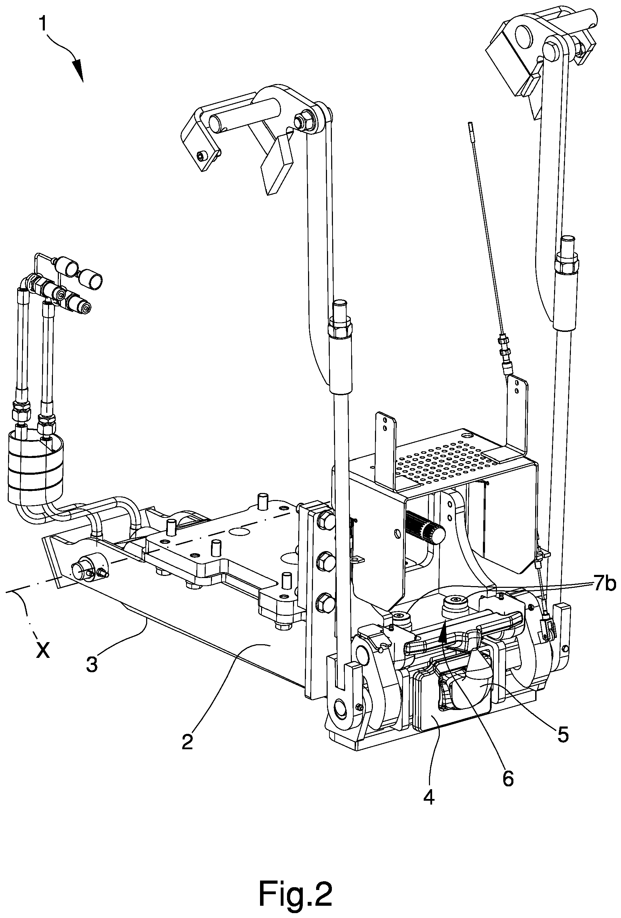

Figure 2 is an axonometric view of the device of Figure 1 in the towing configuration;
Figure 3 is a sectional view of the locking means of the device of Figure 2 in the active configuration;
Figure 4 is a sectional view of the locking means of Figure 3 in the deactivated configuration;
Figure 5 is an axonometric view of a device according to the invention provided with detection means for detecting the position of the locking elements;
Figure 6 is an enlarged top plan view of a detail of the device of Figure 5;
Figure 7 is a sectional view of the detail of Figure 6 along the plane VII-VII;

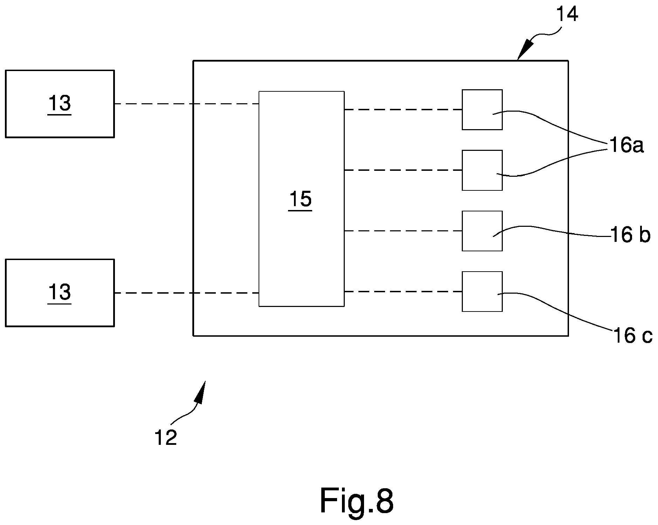

Figure 8 is a schematic representation of the detection means of the device of Figure 5.

With particular reference to such figures, globally indicated with reference numeral 1 is a towing device for agricultural or industrial vehicles.

The device 1 comprises an upper frame 2, associable with an agricultural or industrial vehicle, a lower frame 3 hinged to the upper frame 2 and an extractable portion 4 associated with the lower frame 3 in a sliding manner. The extractable portion 4 supports a hooking element 5 adapted to engage with the vehicle to be towed.

In particular, the lower frame 3 is hinged to the upper frame 2 around an axis of rotation X and is movable between a closed configuration, in which the two frames 2 and 3 are substantially aligned with one another, and an open configuration, in which the lower frame 3 is rotated with respect to the closed configuration so as to be inclined with respect to the upper frame 2.

In turn, the extractable portion 4 is movable between a retracted position, in which the hooking element 5 is approached to the lower frame 3, and an extended position, in which the hooking element 5 is moved away from the lower frame 3.

More in detail, the device 1 has a coupling configuration, in which the lower frame 3 is in the open configuration and the extractable portion 4 is in the extended position, so as to allow the search and engagement with the vehicle to be towed, and a towing configuration, in which the lower frame 3 is in the closed configuration and the extractable portion 4 in the retracted position.

The device 1 also comprises locking means 6 for locking the extractable portion 4 with respect to the lower frame 3 when the device itself is located in the towing configuration. The locking means 6 are adapted to transmit the tensile stress of the hooking element 5 to the upper frame 2 by means of the extractable portion 4.

More particularly, the locking means 6 comprise at least one locking element 7 associated with the upper frame 2 and at least one hole 8 defined on the extractable portion 4, where the locking element 7 is adapted to be inserted inside the hole 8, passing through the lower frame 3, when the latter is in the closed configuration and the extractable portion 4 is in the retracted position. The lower frame 3 has at least one opening 9 adapted to allow the passage of the locking element 7 and which is aligned with the hole 8 when the extractable portion 4 is in the retracted configuration.

The locking element 7 is movable between a raised configuration, in which it allows the sliding of the extractable portion 4 with respect to the lower frame 3, and a lowered configuration, in which it is insertable inside the hole 8 when the extractable portion 4 is in the retracted position and the lower frame 3 in the closed configuration.

More in detail, the locking element 7 is inserted in a sliding manner inside a relative seat 10 formed in the upper frame 2.

According to the invention, the locking element 7 has a lower extremity 7a, intended to enter inside the hole 8, and an upper extremity 7b, which protrudes with respect to the upper frame 2, thus being visible from the outside, both in the lowered and in the raised configuration, thus allowing the operator to check constantly and in an easy manner the state of the locking element 7.

The upper extremity 7b is therefore protruding from the seat 10 both in the lowered configuration and in the raised configuration.

According to the invention, moreover, the hole 8 inside which the locking element 7 is inserted is of the through type, so as to allow the exit of any impurities that may accumulate inside and hinder the insertion of the locking element itself.

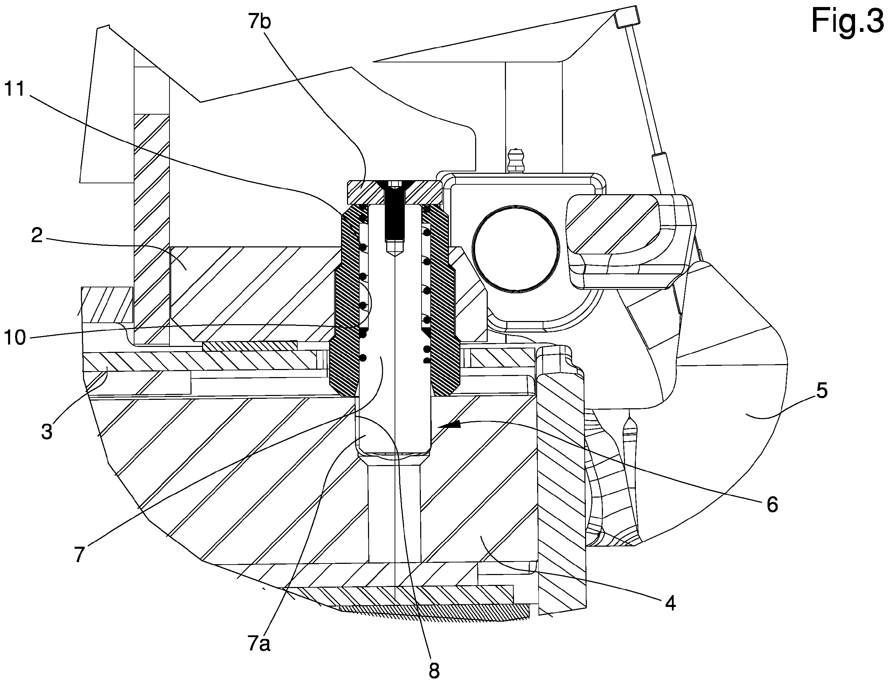

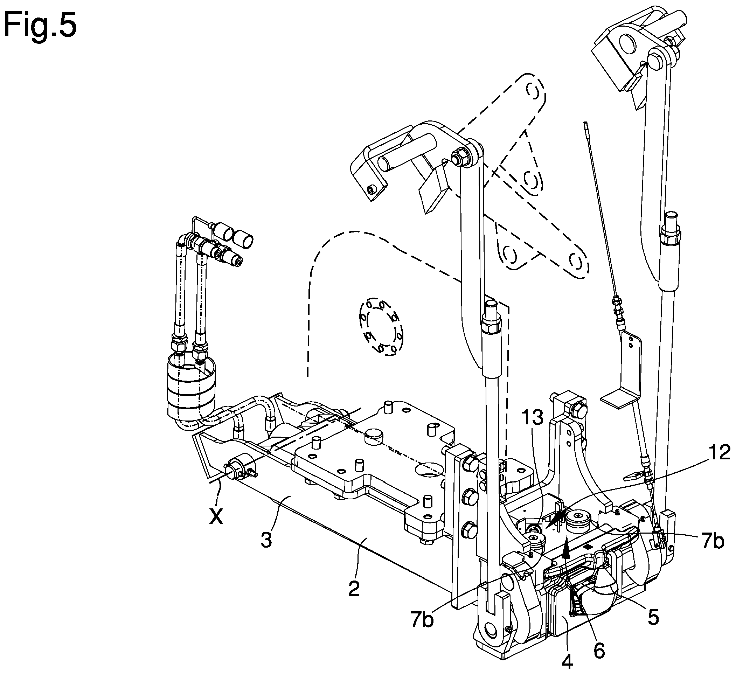

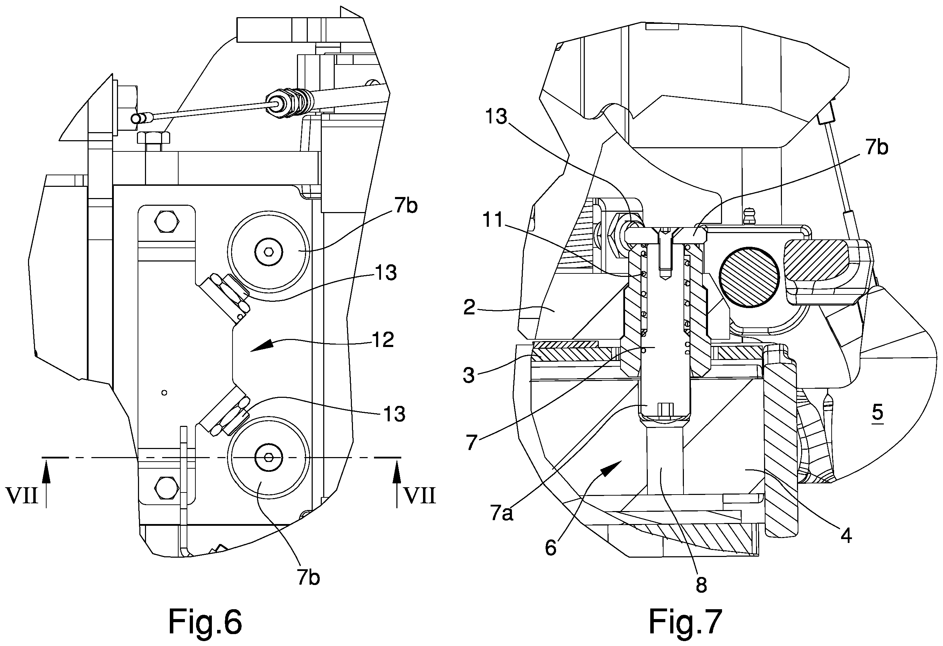

Preferably the locking means 6 comprise elastic means 11 adapted to push the locking element 7 towards the lowered configuration, in order to ensure that the locking element itself enters inside the hole 8 as a result of their alignment. As can be seen from Figure 3, the elastic means 11 are arranged inside the seat 10. Advantageously, in the embodiment shown in Figures 5 to 7, the device 1 comprises detection means 12 for detecting the position of the locking element 7.

More in detail, the detection means 12 comprise at least one sensor 13 adapted to detect when the locking element 7 is in the lowered configuration. The sensor 13 is the type of a proximity sensor.

Suitably, the sensor 13 is associated with the upper frame 2 and is positioned in the proximity of the locking element 7.

Preferably, the sensor 13 is of the inductive type and the locking element 7 comprises at least one ferromagnetic portion associated with its upper extremity 7b, so that the sensor 13 detects the magnetic field variation when the locking element 7 reaches the lowered configuration.

It appears easy to understand how a sensor 13 can be used in a similar manner which is adapted to detect when the locking element 7 is in the raised configuration.

The detection means 12 also comprise signaling means 14 for signaling the position of the locking element 7, which are operatively connected to the sensor 13.

More particularly, the signaling means 14 are adapted to emit at least a first luminous signal when the locking element 7 is in the lowered configuration. The signaling means 14 e.g. comprise a microprocessor 15, operatively connected at input to the sensor 13 and at output to a first luminous LED 16a, which is adapted to receive the signal emitted by the sensor 13, of the on-off type, and consequently to control the ignition or not of the first luminous LED 16a.

In the embodiment represented in the figures, the locking means 6 comprise two locking elements 7 adapted to be inserted in corresponding holes 8 defined on the extractable portion 4.

In this preferred embodiment, the detection means 12 comprise at least two sensors 13, one for each locking element 7, and the signaling means 14 are adapted to signal when both locking elements 7 are in the lowered configuration.

Advantageously, the signaling means 14 are adapted to emit the first luminous signal for each locking element 7, so as to signal when each of them is in the lowered configuration, and a second luminous signal, different to the first signal, when both locking elements 7 are in the lowered configuration.

The aforementioned microprocessor is therefore connected at input to both sensors 13 and at output to a pair of first LEDs 16a and to a second LED 16b different to the first LEDs 16a. More particularly, the microprocessor 15 is adapted to receive the signal emitted by each sensor 13, consequently commanding the turning on of the relative first LED 16a when the corresponding locking element 7 is in the lowered configuration and commanding the turning on of the second LED 16b when both locking elements 7 are in the lowered configuration, and therefore when both first LEDs 16a are on.

Preferably, the second LED 16b, besides being separate from the first LEDs 16a, also has a different color, so as to be more easily identifiable by the operator.

Therefore, if one of the locking elements 7 is in the raised configuration, the corresponding sensor 13 will not send any signal to the microprocessor 15 and the relative first LED 16a will remain off. Consequently, the second LED 16b will also be off.

Suitably, the signaling means 14 are also adapted to emit a third luminous signal as a result of the malfunction of at least one of the sensors 13, e.g. in case one of them is disconnected or not powered properly. The signaling means 14 therefore comprise at least a third LED 16c, operatively connected to the microprocessor 15, adapted to emit the third luminous signal.

The operation of the present invention is as follows.

In order to tow a vehicle, and then to couple the hooking element 5 to the vehicle to be towed, the operator brings the device 1 to the coupling configuration, in which the lower frame 3 is in the open configuration and the extractable portion 4 in the extended position.

Once the hooking element 5 has been engaged with the vehicle to be towed, the device 1 is brought to the towing configuration, in which the lower frame 3 is in the closed configuration and the extractable portion 4 in the retracted position. This operation can be performed by moving the extractable portion 4 and the lower frame 3 in sequence or vice versa.

In the first case the extractable portion 4 is brought to the retracted position, thus aligning the holes 8 with the openings 9 and, subsequently, the lower frame 3 is brought from the open configuration towards the closed one. This way, the locking elements 7 are maintained constantly in the lowered configuration, except the case in which, when the lower frame 3 is brought to the closed configuration, the extractable portion 4 has not reached the retracted position yet, whereby the locking elements 7 are pushed by the extractable portion itself towards the raised configuration, thus allowing the operator to verify their position.

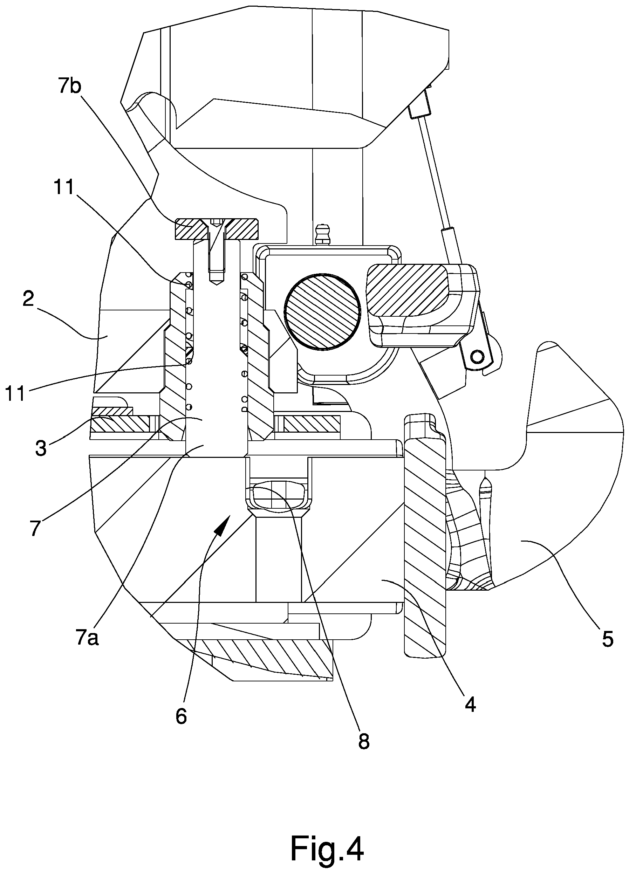

In the second case, the lower frame 3 is brought from the open configuration to the closed configuration and, subsequently, the extractable portion 4 is brought from the extended position towards the retracted one. During its displacement to reach the retracted position, the extractable portion 4 displaces the locking elements 7 to the raised configuration (as shown in Figure 4), counteracting the elastic means 11. The operator, seeing the upper extremity 7b which protrudes from the upper frame 2 is able to identify immediately that the towing configuration has not been reached yet and the device 1 is not in safe conditions. Once the retracted position has been reached, as a result of the alignment with the openings 9 and with the holes 8, the locking elements 7 are pushed by the elastic means 11 inside the holes themselves by locking the extractable portion 4 with respect to the upper frame 2.

As already described above, when each locking element 7 reaches the lowered configuration, the relative sensor 13 sends a signal to the microprocessor 15 which activates the corresponding first LED 16a. The instant when the locking elements 7 are in the lowered configuration both the first LEDs 16a are on, as well as the second LED 16b. This allows the operator to check easily and in a very intuitive manner the configuration of the locking elements 7 and, therefore, whether the towing operation takes place in safety conditions or not.

If one of the sensors 13 is disconnected, non-powered or powered at a voltage different to the nominal voltage, preferably comprised between 10V and 15V, the microprocessor would activate the third LED 16c so as to signal the presence of a malfunction.

It has in practice been observed that the described invention achieves the intended objects and in particular the fact is underlined that the locking elements associated with the upper frame in a sliding manner and projecting with respect to the same when disengaged from the extractable portion, allow the operator to check in an easy and practical manner their position and safety conditions.

## Claims

1. Towing device (1) for an agricultural or industrial vehicle, comprising:
- an upper frame (2) associable with an agricultural or industrial vehicle;
- a lower frame (3) hinged to said upper frame (2) and movable between a closed configuration and at least one open configuration;
- at least one extractable portion (4) associated with said lower frame (3) in a sliding manner and supporting at least one hooking element (5) for hooking the vehicle to be towed; said extractable portion (4) being movable between a retracted position and an extended position;
- locking means (6) of said extractable portion (4) with respect to said lower frame (3) comprising at least one locking element (7) associated with said upper frame (2) and adapted to be inserted inside a corresponding hole (8) defined on said extractable portion (4) when this is in the retracted position passing through said lower frame (3), with the latter in closed configuration, where said locking element (7) is movable between a raised configuration, wherein it allows the sliding of said extractable portion (4) with respect to the lower frame (3), and a lowered configuration, wherein it is insertable inside said hole (8) with said extractable portion (4) in retracted position and said lower frame (3) in closed configuration;
where said locking element (7) has an upper extremity (7b) protruding from said upper frame (2), and visible from the outside, both in the raised and in the lowered configuration, and by the fact that said hole (8) is of the through type, said locking element (7) being inserted in a sliding manner inside a relative seat (10) formed in said upper frame (2) and said upper extremity (7b) protruding from said seat (10) both in the lowered configuration and in the raised configuration;
**characterized by** the fact that:
said locking means (6) comprising at least two of said locking elements (7), each of which is adapted to be inserted in a corresponding hole (8) defined on said extractable portion (4);
and by the fact that the device (1) comprises:
detection means (12) for detecting the position of said locking element (7), comprising at least two sensors (13), one for each of said locking elements (7), adapted to detect when said locking elements (7) are in the lowered configuration, and comprising signaling means (14) for signaling the position of said locking elements (7) which are operatively connected to said sensors (13); where said signaling means (14) are adapted to signal when both said locking elements (7) are in the lowered configuration; said signaling means (14) being adapted to emit a first luminous signal for each of said locking elements (7), so as to signal when each of them is in the lowered configuration, and a second luminous signal, different to said first luminous signal, when both said locking elements (7) are in the lowered configuration.

2. Device (1) according to claim 1, **characterized in that** said locking means (6) comprise elastic means (11) adapted to push said locking element (7) towards the lowered configuration.

3. Device (1) according to one or more of the preceding claims, **characterized in that** said lower frame (3) has at least one opening (9) for the passage of said locking element (7), said opening (9) being aligned with said hole (8) when the extractable portion (4) is in the retracted configuration.

4. Device (1) according to one or more of the preceding claims, **characterized in that** said sensor (13) is associated with said upper frame (2) in the proximity of said locking element (7).

5. Device (1) according to one or more of the preceding claims, **characterized in that** said sensor (13) is of the inductive type and **in that** said locking element (7) comprises at least one ferromagnetic portion associated with said upper extremity (7b), said sensor (13) detecting the magnetic field variation when said upper extremity (7b) reaches the lowered configuration.

6. Device (1) according to one or more of the preceding claims, **characterized in that** said signaling means (14) are adapted to emit a third luminous signal as a result of the malfunction of at least one of said sensors (13).

## Patentansprüche

1. Zugvorrichtung (1) für ein landwirtschaftliches oder industrielles Fahrzeug, umfassend:
- einen oberen Rahmen (2), der mit einem landwirtschaftlichen oder industriellen Fahrzeug verbunden werden kann;
- einen unteren Rahmen (3), der an dem oberen Rahmen (2) angelenkt ist und zwischen einer geschlossenen Konfiguration und mindestens einer offenen Konfiguration bewegbar ist;
- mindestens einen ausziehbaren Abschnitt (4), der mit dem unteren Rahmen (3) verschiebbar verbunden ist und mindestens ein Hakenelement (5) zum Einhaken des zu ziehenden Fahrzeugs trägt; wobei der ausziehbare Abschnitt (4) zwischen einer eingefahrenen Stellung und einer ausgefahrenen Stellung bewegbar ist;
- Verriegelungsmittel (6) des in Bezug auf den unteren Rahmen (3) ausziehbaren Abschnitts (4), umfassend mindestens ein Verriegelungselement (7), das mit dem oberen Rahmen (2) verbunden ist und dafür ausgelegt ist, in einem entsprechenden Loch (8), das an dem ausziehbaren Abschnitt (4) definiert ist, eingesetzt zu sein, wenn sich dieser in der eingefahrenen Stellung befindet, hindurchgehend durch den unteren Rahmen (3), wobei sich letzterer in der geschlossenen Konfiguration befindet, wobei das Verriegelungselement (7) zwischen einer angehobenen Konfiguration, in der es das Verschieben des ausziehbaren Abschnitts (4) in Bezug auf den unteren Rahmen (3) ermöglicht, und einer heruntergelassenen Konfiguration, in der es in das Loch (8) einsetzbar ist, wobei sich der ausziehbare Abschnitt (4) in der eingefahrenen Stellung und der untere Rahmen (3) in der geschlossenen Konfiguration befindet;
wobei das Verriegelungselement (7) ein oberes Ende (7b) aufweist, das von dem oberen Rahmen (2) aus hervorsteht und von außen, sowohl in der angehobenen als auch der heruntergelassenen Konfiguration, sichtbar ist, und **gekennzeichnet durch** die Tatsache, dass das Loch (8) vom Durchgangstyp ist, das Verriegelungselement (7) in einem jeweiligen Sitz (10), der in dem oberen Rahmen (2) gebildet ist, verschiebbar eingesetzt ist, und das obere Ende (7b) von dem Sitz (10) aus sowohl in der heruntergelassenen Konfiguration als auch in der angehobenen Konfiguration hervorsteht;
**gekennzeichnet durch** die Tatsache, dass:
die Verriegelungsmittel (6) mindestens zwei der Verriegelungselemente (7) umfassen, die jeweils dafür ausgelegt sind, in ein entsprechendes Loch (8), das an dem ausziehbaren Abschnitt (4) definiert ist, eingesetzt zu werden;
und durch die Tatsache, dass die Vorrichtung (1) Folgendes umfasst:
Detektionsmittel (12) zum Detektieren der Position des Verriegelungselements (7), umfassend mindestens zwei Sensoren (13), einen für jedes der Verriegelungselemente (7), die dafür ausgelegt sind, zu detektieren, wann sich die Verriegelungselemente (7) in der heruntergelassenen Konfiguration befinden, und umfassend Signalisierungsmittel (14) zum Signalisieren der Position der Verriegelungselemente (7), die betriebsmäßig mit den Sensoren (13) verbunden sind;
wobei die Signalisierungsmittel (14) dafür ausgelegt sind, zu signalisieren, wann sich beide Verriegelungselemente (7) in der heruntergelassenen Konfiguration befinden; wobei die Signalisierungsmittel (14) dafür ausgelegt sind, ein erstes Leuchtsignal für jedes der Verriegelungselemente (7) auszusenden, um zu signalisieren, wann sich jedes davon in der heruntergelassenen Konfiguration befindet, und ein zweites Leuchtsignal, das sich von dem ersten Leuchtsignal unterscheidet, auszusenden, wenn sich beide Verriegelungselemente (7) in der heruntergelassenen Konfiguration befinden.

2. Vorrichtung (1) nach Anspruch 1, **dadurch gekennzeichnet, dass** die Verriegelungsmittel (6) elastische Mittel (11) umfassen, die dafür ausgelegt sind, das Verriegelungselement (7) in Richtung der heruntergelassenen Konfiguration zu schieben.

3. Vorrichtung (1) nach einem oder mehreren der vorhergehenden Ansprüche, **dadurch gekennzeichnet, dass** der untere Rahmen (3) mindestens eine Öffnung (9) für den Durchtritt des Verriegelungselements (7) aufweist, wobei die Öffnung (9) mit dem Loch (8) ausgerichtet ist, wenn sich der ausziehbare Abschnitt (4) in der eingezogenen Konfiguration befindet.

4. Vorrichtung (1) nach einem oder mehreren der vorhergehenden Ansprüche, **dadurch gekennzeichnet, dass** der Sensor (13) in der Nähe des Verriegelungselements (7) mit dem oberen Rahmen (2) verbunden ist.

5. Vorrichtung (1) nach einem oder mehreren der vorhergehenden Ansprüche, **dadurch gekennzeichnet, dass** der Sensor (13) induktiver Art ist, und dadurch, dass das Verriegelungselement (7) mindestens einen ferromagnetischen Abschnitt umfasst, der mit dem oberen Ende (7b) verbunden ist, wobei der Sensor (13) die Magnetfeldschwankung erfasst, wenn das obere Ende (7b) die heruntergelassene Konfiguration erreicht.

6. Vorrichtung (1) nach einem oder mehreren der vorhergehenden Ansprüche, **dadurch gekennzeichnet, dass** die Signalisierungsmittel (14) dafür ausgelegt sind, ein drittes Leuchtsignal als Folge des Funktionsausfalls von mindestens einem der Sensoren (13) auszusenden.

## Revendications

1. Dispositif de remorquage (1) pour un véhicule agricole ou industriel, comprenant :
- un châssis supérieur (2) pouvant être associé à un véhicule agricole ou industriel ;
- un châssis inférieur (3) articulé sur ledit châssis supérieur (2) et mobile entre une configuration fermée et au moins une configuration ouverte ;
- au moins une portion extractible (4) associée audit châssis inférieur (3) de manière coulissante et supportant au moins un élément d'accrochage (5) pour accrocher le véhicule destiné à être remorqué ; ladite portion extractible (4) étant mobile entre une position rétractée et une position étendue ;
- un moyen de verrouillage (6) de ladite portion extractible (4) par rapport audit châssis inférieur (3), comprenant au moins un élément de verrouillage (7) associé audit châssis supérieur (2) et adapté pour être inséré à l'intérieur d'un trou correspondant (8) défini sur ladite portion extractible (4) lorsque celle-ci est dans la position rétractée passant à travers ledit châssis inférieur (3), avec ce dernier dans une configuration fermée, où ledit élément de verrouillage (7) est mobile entre une configuration levée, dans laquelle il permet le coulissement de ladite portion extractible (4) par rapport au châssis inférieur (3), et une configuration baissée, dans laquelle il est insérable à l'intérieur dudit trou (8) avec ladite portion extractible (4) dans la position rétractée et ledit châssis inférieur (3) dans une configuration fermée ; où ledit élément de verrouillage (7) a une extrémité supérieure (7b) faisant saillie à partir dudit châssis supérieur (2), et visible à partir de l'extérieur, à la fois dans la configuration levée et dans la configuration baissée, et par le fait que ledit trou (8) est du type débouchant, ledit élément de verrouillage (7) étant inséré de manière coulissante à l'intérieur d'un siège relatif (10) formé dans ledit châssis supérieur (2) et ladite extrémité supérieure (7b) faisant saillie à partir dudit siège (10) à la fois dans la configuration baissée et dans la configuration levée ;
**caractérisé par le fait que** :
ledit moyen de verrouillage (6) comprenant au moins deux desdits éléments de verrouillage (7), dont chacun est adapté pour être inséré dans un trou correspondant (8) défini sur ladite portion extractible (4) ;
et **par le fait que** le dispositif (1) comprend :
un moyen de détection (12) pour détecter la position dudit élément de verrouillage (7), comprenant au moins deux capteurs (13), un pour chacun desdits éléments de verrouillage (7), adaptés pour détecter l'instant auquel lesdits éléments de verrouillage (7) sont dans la configuration baissée, et comprenant un moyen de signalisation (14) pour signaler la position desdits éléments de verrouillage (7) qui sont fonctionnellement raccordés auxdits capteurs (13) ;
où ledit moyen de signalisation (14) est adapté pour signaler l'instant auquel les deux lesdits éléments de verrouillage (7) sont dans la configuration baissée ; ledit moyen de signalisation (14) étant adapté pour émettre un premier signal lumineux pour chacun desdits éléments de verrouillage (7), afin de signaler l'instant auquel chacun d'eux est dans la configuration baissée, et un deuxième signal lumineux, différent dudit premier signal lumineux, lorsque les deux lesdits éléments de verrouillage (7) sont dans la configuration baissée.

2. Dispositif (1) selon la revendication 1, **caractérisé en ce que** ledit moyen de verrouillage (6) comprend un moyen élastique (11) adapté pour pousser ledit élément de verrouillage (7) vers la configuration baissée.

3. Dispositif (1) selon une ou plusieurs des revendications précédentes, **caractérisé en ce que** ledit châssis inférieur (3) a au moins une ouverture (9) pour le passage dudit élément de verrouillage (7), ladite ouverture (9) étant alignée avec ledit trou (8) lorsque la portion extractible (4) est dans la configuration rétractée.

4. Dispositif (1) selon une ou plusieurs des revendications précédentes, **caractérisé en ce que** ledit capteur (13) est associé audit châssis supérieur (2) à proximité dudit élément de verrouillage (7).

5. Dispositif (1) selon une ou plusieurs des revendications précédentes, **caractérisé en ce que** ledit capteur (13) est du type inductif et **en ce que** ledit élément de verrouillage (7) comprend au moins une portion ferromagnétique associée à ladite extrémité supérieure (7b), ledit capteur (13) détectant la variation de champ magnétique lorsque ladite extrémité supérieure (7b) atteint la configuration baissée.

6. Dispositif (1) selon une ou plusieurs des revendications précédentes, **caractérisé en ce que** ledit moyen de signalisation (14) est adapté pour émettre un troisième signal lumineux en conséquence du mauvais fonctionnement d'au moins un desdits capteurs (13).
